# EUROPEAN PATENT SPECIFICATION

(11) **EP 0 485 847 B1**
(45) Date of publication and mention of the grant of the patent: **08.03.2000**
(21) Application number: 91118760.7
(22) Date of filing: 04.11.1991
(51) Int. Cl.: B32B 27/08, B65D 65/40

(54) **Multilayer containers with improved heat processability properties**
Mehrschichtiger Behälter mit guten Heissverarbeitungseigenschaften
Conteneurs multicouches avec des propriétés de mise en oeuvre à chaud améliorées

(30) Priority: 16.11.1990 IT 2207890
(43) Date of publication of application: 20.05.1992
(60) Divisional application: 98250290.8
(73) Proprietor: Cryovac, Inc., Duncan, S.C. 29334-0464 (US)
(72) Inventor: Paleari, Mario, I-20010 Pogliano Milanese (IT); Parnell, Colin Douglas, I-21020 Cazzago Brabbia (Varese) (IT)
(74) Representative: UEXKÜLL & STOLBERG

(56) References cited:
- EP-A- 0 069 495
- EP-A- 0 293 187
- DE-A- 3 624 543
- US-A- 4 058 647

## Description

This invention relates to a container structure, such as a bag, made of heat-shrinkable multilayer thermoplastic films, which has improved seal performance and improved heat processability properties.

In the field of packaging, multilayer thermoplastic films are being increasingly used in order to provide a balance of requested properties such as mechanical and abuse strength, gas barrier properties, attractive appearance, good optical properties and good heat seal performance.

Particularly in food packaging, a further required property is often heat-shrinkability which is provided by subjecting the film to orientation by mono- or bi-axial stretching.

Amongst the many prior art references relating to multilayer films for packaging, the following can be mentioned as of a certain interest in connection with the present invention:

U.S. Patent No. 4,495,249 issued to Ohya et al discloses a multilayer laminate film with a core layer of a hydrolysed ethylene-vinyl acetate copolymer, and two outer layers of a blend of copolymer of ethylene and vinyl acetate and a copolymer of propylene and ethylene or linear low density polyethylene. The multilayer laminate film of the reference can be made heat shrinkable and has gas barrier properties.

U.S. Patent No. 4,182,457 (Yamada et al) discloses a container with an EVOH core, adhesive layers, and additional layers of e.g. polypropylene or ethylene propylene copolymer.

U.S. Patent No. 4,511,610 (Yazaki et al) discloses a container with an EVOH core, adhesive layers, and additional layers of e.g. polypropylene or ethylene propylene copolymer.

U.S. Patent No. 4,405,667 issued to Christensen et al appears to disclose a retortable pouch having a linear low density polyethylene heat seal layer, a second layer of a blend of linear low density polyethylene and propylene ethylene copolymer, optional third, fourth, and fifth layers of propylene ethylene copolymer, a sixth layer of an anhydride modified polypropylene, a seventh layer of nylon, an eighth layer of EVOH and a ninth layer of nylon.

U.S. Patent No. 4,532,189 issued to Mueller discloses a shrinkable film having two outer layers each comprising e.g. a blend of polypropylene and ethylene propylene copolymer.

Also of interest is U.S. Patent No. 4,400,428 issued to Rosenthal et al which discloses a composite film having a biaxally oriented polypropylene based film (BOPP) laminated on at least one surface with a multilayer structure including a gas barrier layer of a hydrolyzed ethylene vinyl acetate copolymer and a layer adjacent to the base film, and a heat sealable outer layer which may be, for example, modified propylene/ethylene copolymer.

EPO Patent Application No. 0,149,321 (Ohya et al) discloses a heat shrinkable tubular film having a gas barrier layer of vinylidene chloride copolymer, outer layers of polyolefin such as ethylene propylene copolymer, polypropylene and blends thereof, at least one intermediate layer of for example a polyamide, and adhesive layers arranged between any of the above layers.

U.K. Patent Application GB 2,139,948 (Dobbie) discloses a multilayer, preferably coextruded five-layer heat sealable film having a surface layer of a heat sealable polymer such as linear low density polyethylene or LLDPE blended with other polymers such as EVA, an EVOH layer, and a layer of polypropylene. These layers can be bonded by polymeric adhesive the layers.

U.K. Patent Application GB 2 221 649 (Okura) discloses a composite film with improved heat shrinkable properties comprising a core layer formed of a linear, low density polyethylene having a density of 0.890 to 0.905 g/cc and/or of a copolymer of propylene with one or more alpha-olefins and two outer layers formed of a crystalline polypropylene resin having a melting point of 135-150°C wherein the crystalline propylene resin may be an ethylene-propylene copolymer or an ethylene-propylene-butene copolymer.

EP-A-0 293 187 discloses a laminated film comprising a base layer of a polymer based on 4-methyl-pentene; provided on at least one side of the base layer, an interlayer of an alpha olefin copolymer comprising 10-85 mole% of propylene, 3-60 mole% of 1-butene and 10-85 mole% of an alpha olefin comprising 5 or more carbon atoms, the degree of crystallinity of the copolymer as measured by X-ray diffractometry being at most 20%; and provided on the interlayer, a heat-sealable layer of an alpha olefin polymer material predominantly comprising an alpha olefin having 2-4 carbon atoms.

DE-A-3 624 543 discloses a monoaxially oriented multilayer film comprising a gas barrier layer of ethylene-vinyl acetate material and a heat-salable layer comprising 82% propylene and a total of 18% of 1-butene and ethylene.

None of such prior art references appears to relate to a multilayer thermoplastic film having improved seal performance particularly in hot conditions as provided by the container of the present invention.

It is an object of the present invention to provide a container structure, such as a bag structure, having at least one sealed area and having improved seal performance in terms of seal thermal resistance.

It is another object of the present invention to provide a container structure having a unique balance of impact and abuse resistance, processability, sealability and thermal resistance.

It is a further object of the present invention to provide a container structure fit for use in heat resistant packaging.

These and further objects are achieved by a heat treatable container made of a heat-shrinkable multilayer film comprising at least an outer heat seal layer and optionally a core gas barrier layer, said heat seal layer comprising polymers of propylene copolymerized with from 1 to 10% by weight of two or more alpha-olefins selected from the group consisting of ethylene and alpha olefins having from 4 to 8 carbon atoms,

The heat seal layer according to this invention comprises preferably a polymer of propylene polymerized with 3 to 10 % by weight of said alpha-olefins.

While a polymer of propylene with any two or more alpha-olefins having up to 8 carbon atoms can be used, a preferred polymer is a terpolymer of propylene with ethylene and butene. In this case, the weight ratio between the ethylene and butene comonomers can range from 1 to 6. A specific embodiment of the terpolymer consists, e.g., of 94/4/2 parts by weight of propylene/ethylene/butene.

In a further embodiment of this invention the heat sealing layer comprises a blend of said propylene terpolymer or higher polymer with an additional propylene copolymer, in a proportion of 99 to 50% by weight of the terpolymer and 1 to 50% by weight of the additional copolymer, said percentages being referred to the whole blend.

The additional propylene copolymer comprises from 99 to 80% by weight of propylene and from 1 to 20% by weight of a comonomer selected from alpha-olefins with 2 to 8 carbon atoms, preferably from ethylene and butene.

In most packaging applications the multilayer film of which the container of this invention is made comprises preferably, in addition to the heat seal outer layer and a gas barrier core layer, a further outer structural layer.

The gas barrier layer is made of conventional polymers with gas barrier properties such as ethylene-vinyl alcohol (EVOH) copolymers having for example an ethylene content of 30 to 47%, polyvinylidene chloride copolymers (PVDC) with vinyl chloride or methyl acrylate comonomers, or both, or polyamides or copolyamides or blends thereof with EVOH.

The outer structural layer can be made of the same propylene polymer as the heat sealing layer or of different conventional polymers known to impart mechanical strength to the film. Such polymers can be selected for instance from polyethylenes of very low density (VLDPE), of high density (HDPE) or linear low density (LLDPE); ethylene-vinyl acetate (EVA) copolymers with VA content of 2 to 30%, preferably of 6 to 12% ; ethylene copolymers with acrylic or methacrylic comonomers; ionomers; olefinic polymers and copolymers modified with functional groups; polyamides; polyesters, copolyesters; and their blends.

Examples of acrylic and methacrylic comonomers usable in such ethylene copolymers are acrylic and methacrylic acids, and alkyl acrylates and methacrylates with C1-C4 alkyl moieties such as butyl acrylate, methyl acrylate and ethyl acrylate, modified or not with functional groups, such as with anhydrides, particularly maleic anhydride. Said modified olefinic polymers and copolymers can be selected from EVA, polyethylene and polypropylene, while said polyamides can be selected from Nylon 6, Nylon 6-66, Nylon 6-12 and Nylon 6-69.

As an ionomeric polymer the one available from E.I. duPont de Nemours (USA) under the trademark Surlyn, can be used.

The multilayer films of which the containers of the invention are made are preferably produced by simultaneous or sequential coextrusion of the various component layers with interposition therebetween of adhesive tie layers. For producing tie layers, conventional polymers known for such uses can be employed such as for instance ethylene polymers and copolymers modified or not with functional groups, in particular anhydride modified ethylene copolymers. Illustrative of such polymers and copolymers are EVA copolymers modified by functional groups and having a VA content of 6 to 25% by weight; polyethylene and polypropylene polymers modified by functional groups; LLDPE; VLDPE; copolymers of ethylene-butyl acrylate (EBA), ethylene-methyl acrylate (EMA), ethylene-methacrylic acid (EMAA) or ethylene-acrylic acid (EAA); ionomers; modified or not with functional groups; and blends thereof.

Preferably the multilayer film making up the container structure of this invention comprises an at least 5-layer structure of the following type:
Seal/Tie/Barrier/Tie/Structural

Typically, the multilayer film used in the present invention comprises a structure like the following one:
Seal/Inner Structural/Tie/Barrier/Tie/Outer Structural
wherein the inner and outer structural layers can be the same or different and are selected from the polymers mentioned above for the outer structural layer.

The container of this invention is prepared by providing first the multilayer film, by lamination, or preferably by coextrusion in a tubular form. When using this latter technique either all layers are coextruded and then whole multilayer film is cross-linked by irradiation, using conventional irradiation techniques, or first a substrate comprising some of the layers is coextruded, then it is irradiated in order to cross-link these layers and finally a coating is extruded on the cross-linked substrate. Another alternative is that of cross-linking the whole structure after orientation.

Thus, according to a specific embodiment, a substrate can be first formed by coextruding the heat sealant with an inner structural layer and optionally with a first tie layer, then this substrate is subjected to cross-linking by irradiation and finally a coating is extruded over the cross-linked substrate comprising the remaining layers such as a second (optional) tie /barrier/third tie/outer structural layer. The various adhesive tie layers can be the same or different depending also on the nature of the layers to be adhered therewith.

When preparing the heat shrinkable bags, the coextruded tubular multilayer film obtained as stated above is then subjected to orientation by mono- or bi-axial stretching in the machine direction or transversally thereto, or both by well known stretching techniques. For instance the bi-axial stretch is performed by the "air-bubble" blowing method, on-line or off-line of the extrusion process.

Thereafter bags are formed by cutting lengths of the tubular film and sealing such lengths transversely to the axial direction of the tubular film so providing bags with a bottom seal, or providing bags with two side seals.

It is to be noted that these latest bags with side seals are not obtainable with industrial processing equipment from conventional multilayer films having seal layers different from those according to the present invention because of the poor processing performance of such conventional sealing layers.

The layers according to this invention show outstanding properties in terms of cold and heat seal strength. Thus, when such bags are used in food packaging applications, the food item is inserted in the bag, the pack is vacuumized and then closed by heat sealing or clipping and then, the package as a whole can be subjected to various heat treatments such as cooking at a temperature up to about 85^{o}C for several hours, say 5-6 hours, or pasteurization treatment at 95-100°C for about 1/2 to 1 hour. The bags stand such treatments without revealing damages or weakening of the seal or damages to the integrity of the whole pack for example by delamination. These properties are very important in preserving the integrity of the packed food which otherwise, in the presence of damaged bags, should be discarded. Furthermore, the packages made with the bags of this invention stand without breaking or damages of the sealed area electrical "corona" treatment aimed at improving the bag adhesion to the food surface, in particular when meat is being packed, so as to better preserve the packed food and improve appearance of the package.

The examples which follow are intended as purely illustrative of the performances shown by the inventive bags.

### Example 1

A multilayer film for producing bags according to this invention and a control multilayer film have been prepared by simultaneous coextrusion of all the respective layers in tubular form and subsequent cross-linking of the coextruded film by irradiation. The two films have the following structure:
Control:
   Sealing 1/EVA 1/Tie/EVOH/Tie/EVA 2
Film of this invention:
   Sealing 2/EVA 1/Tie/EVOH/Tie/EVA 2
wherein:
- Sealing 1:: is a copolymer of 96.5 pbw Propylene and 3.5 pbw Ethylene
- Sealing 2:: is a terpolymer of 94/4/2 Propylene/Ethylene/Butene
- EVA 1 :: is an inner structural layer with a VA content of 12% by weight
- EVA 2 :: is an outer structural layer with a VA content of 6% by weight
- Tie :: is an EVA copolymer with a VA content of 14 % and modified with maleic anhydride

Typical physical and mechanical properties of the two films are reported in table 1.

**TABLE 1**

| PHYSICAL - MECHANICAL PROPERTIES | | | |
|---|---|---|---|
| | | CONTROL | FILM OF THIS INVENTION |
| = THICKNESS (microns) (ASTM D-374) | | 60 | 60 |
| = TENSILE STRENGTH (KG/cm²) (ASTM D-882) | MD | 400 | 420 |
| | TD | 430 | 450 |
| = ELONGATION (%) (ASTM D-882) | MD | 160 | 190 |
| | TD | 120 | 130 |
| = SHRINK (%) (by immersion at 85°C for 5') | MD | 23 | 24 |
| | TD | 33 | 32 |
| = OXYGEN PERMEABILITY (cm³/24h m² bar) (ASTM D 3985) | | 10 | 10 |

| | | | |
|---|---|---|---|
| MD = Machine Direction | | | |
| TD = Transverse Direction | | | |

The tubular films have been converted into 300 x 500 mm bags having each a bottom seal. 75 bags of each type of multilayer film have been tested for cold seal strength by measuring the burst resistance at room temperature of the bags as prepared and after ageing for two weeks. The results, as an average value of the water pressure at burst in inches, are given in the following table 2.

**Table 2**

| Burst resistance (iowp) | | |
|---|---|---|
| | As prepared | After ageing |
| Control | 137 | 113 |
| Ex.1 | 156 | 138 |

Furthermore, the heat seal strength of these bags has been also measured by immersing the seal in a hot water bath at 85^{o}C and then applying internal pressure until burst occurs. The bags made of the inventive film and those of the control film showed comparably good heat seal resistence.

### Example 2

The inventive and control bags of Example 1 have been used in cooking and pasteurization tests the result whereof are reported in the following Tables 3 and 4.

**Table 3**

| COOKING TEST | | | |
|---|---|---|---|
| Products: 5 cooked ham cuts | | | |

| TEMPERATURES TIME | TOTAL COOKING TIME (hours) | CONTROL (Corona treated) 300mm WIDE | EX 1 (corona treat.) 300mm WIDE |
|---|---|---|---|
| 95°C X 5h | 5 | OK | OK |
| 90°C X 1 h | 6 | OK | OK |
| 95°C X 1 h | 7 | REJECT | OK |
| 95°C X 2 h | 3 | REJECT | OK |
| NEXT MORNING | 16 | 2 REJECTS | 1 REJECT |

**Table 4**

| PASTEURIZATION TEST | | | |
|---|---|---|---|
| Products: 5 cooked ham cuts. | | | |

| TEMPERATURES - TIME | TOTAL COOKING TIME (hours) | CONTROL 300mm WIDE | EX 1 300mm WIDE |
|---|---|---|---|
| 95°C X 10' | 0,5 | OK | OK |
| 95°C X 4 h | 4 | OK | OK |
| 100°C X 10' | 4h + 10' | REJECT | OK |
| 100°C X 1 h | 5 | - | OK |
| 100°C X 2 h | 6 | - | 1 REJECT |
| 100°C X 3 h | 7 | - | 3 REJECTS |

As it can be noted the bags of this invention have a better performance at higher temperatures and/or for prolonged treatment times, by maintaining the integrity of the pack.

### Example 3

The control and inventive bags of Example 1 after having been submitted to corona discharge treatment have also been subjected to a "meat adhesion" test: the corona treatment improves in fact the adhesion of the bags onto the packed meat so improving product presentation and packaging appearance.

The bags with inserted meat cuts have been heat treated at 70°C for 90' and finally tested by measuring the strength requested to tear off a strip of 25mm cut from the bag adhered on the meat from contact with the meat. The results shown in Table 5 indicate the improved performance of the inventive bags.

**Table 5**

| MEAT ADHESION (g/25mm) | |
|---|---|
| Ex. 1 | Control |
| 16.9 | 13.3 |
| 32.3 | 20.6 |
| 25.0 | 16.4 |
| 22.5 | 22.2 |
| 19.6 | 11.5 |
| Avg. 23.26 | 16.8 |

## Claims

1. A heat treatable container made of a heat-shrinkable multi-layer film comprising at least an outer heat seal layer and optionally a core gas barrier layer, said heat seal layer comprising copolymers of propylene, copolymerized with from 1 to 10% by weight of 2 or more α-olefins selected from the group consisting of ethylene and α-olefins having from 4 to 8 carbon atoms, said container having at least a sealed area.

2. The container of claim 1 wherein the heat seal layer comprises polymers of propylene copolymerized with 3 to 10 % by weight of said two or more alpha-olefins.

3. The container of claim 1 or 2 wherein said heat seal layer comprises terpolymers of propylene with ethylene and butene.

4. The container of claim 1 wherein said heat seal layer comprises a blend of 99 to 50% by weight of said propylene polymers with 1 to 50% by weight of at least an additional propylene copolymer with a comonomer selected from alpha-olefins having from 2 to 8 carbon atoms.

5. The container of claim 4 wherein said additional propylene copolymer comprises from 1 to 20% by weight of said alpha-olefin comonomers.

6. The container of claim 4 or 5 wherein said additional propylene copolymer comprises a comonomer selected from ethylene and butene.

7. The container of claim 1 wherein said gas barrier layer is selected from PVDC and EVOH polymers, and their blends with further polymers.

8. The container of claim 1 made of a multilayer film comprising at least a said heat seal layer, a said core gas barrier layer, and a further outer structural layer.

9. The container of claim g comprising said further outer layer selected from said polymers of propylene copolymerized with from 1 to 20% by weight of two or more alpha-olefins having from 2 to 8 carbon atoms, polyethylenes of very low density (VLDPE), of high density (HDPE) and linear low density (LLDPE), ethylene-vinyl acetate (EVA) copolymers with VA content of 2 to 30%, ethylene copolymers with acrylic and methacrylic comonomers, ionomers, olefinic polymers and copolymers modified with functional groups, polyamides, polyesters, copolyesters, and their blends.

10. The container of claim 9 wherein said acrylic and methacrylic comonomers are selected from acrylic and methacrylic acids, and alkyl acrylates and methacrylates with C1-C4 alkyl moieties, modified or not with functional groups; said modified olefinic polymers and copolymers are selected from modified EVA, polyethylene and polypropylene; and said polyamides are selected from Nylon 6, Nylon 6-66, Nylon 6-12 and Nylon 6-69.

11. The container of claim 8 further comprising adhesive layers interposed between said outer and core layers which are selected from ethylene polymers and copolymers, modified or not with functional groups.

12. The container of claim 1 or 8 made of said multilayer film provided in a tubular form and having a bottom seal transverse to the axial dimension of said tubular film.

13. The container of claim 1 or 8 made of said multilayer film provided in a tubular form and having two side seals parallel to the axial dimension of said tubular film.

14. The container of any one of the preceding claims which has been made heat-shrinkable by at least a monoaxial stretching of said multilayer film.

15. The container of anyone of the preceding claims wherein said multilayer film has at least one layer which has been cross-linked;

16. The container of claim 15 wherein said multilayer film is fully cross-linked by irradiation.

17. The container of anyone of claims 12 to 16 wherein said heat seal layer has been corona treated for imparting protein adhesion properties thereto.

18. The container according to anyone of the preceding claims for use in heat processable packaging.

19. A heat processable package comprising a container according to anyone of claims 1 to 18.

## Patentansprüche

1. Wärmebehandelbarer Behälter, der aus einer Mehrschichtschrumpffolie hergestellt ist, die mindestens eine äußere Heißsiegelschicht und gegebenenfalls eine Gassperrkernschicht umfaßt, wobei die Heißsiegelschicht Copolymere aus Propylen umfaßt, das mit 1 bis 10 Gew.-% von zwei oder mehreren α-Olefinen ausgewählt aus der Gruppe bestehend aus Ethylen und α-Olefinen mit 4 bis 8 Kohlenstoffatomen copolymerisiert worden ist, wobei der Behälter mindestens einen gesiegelten Bereich aufweist.

2. Behälter nach Anspruch 1, bei dem die Heißsiegelschicht Polymere von Propylen, das mit 3 bis 10 Gew.-% der zwei oder mehreren α-Olefine copolymerisiert worden ist, umfaßt.

3. Behälter nach Anspruch 1 oder Anspruch 2, bei dem die Heißsiegelschicht Terpolymere von Propylen mit Ethylen und Buten umfaßt.

4. Behälter nach Anspruch 1, bei dem die Heißsiegelschicht ein Gemisch aus 99 bis 50 Gew.-% der Propylenpolymere mit 1 bis 50 Gew.-% von mindestens einem zusätzlichen Propylen-Copolymer mit einem Comonomer ausgewählt aus α-Olefinen mit 2 bis 8 Kohlenstoffatomen umfaßt.

5. Behälter nach Anspruch 4, bei dem das zusätzliche Propylen-Copolymer 1 bis 20 Gew.-% der α-Olefincomonomere umfaßt.

6. Behälter nach Anspruch 4 oder Anspruch 5, bei dem das zusätzliche Propylen-Copolymer ein Comonomer ausgewählt aus Ethylen und Buten umfaßt.

7. Behälter nach Anspruch 1, bei dem die Gassperrschicht ausgewählt ist aus PVDC- und EVOH-Polymeren und ihren Gemischen mit weiteren Polymeren.

8. Behälter nach Anspruch 1, der aus einer Mehrschichtfolie hergestellt ist, die mindestens eine Heißsiegelschicht, eine Gassperrkernschicht und eine weitere äußere Strukturschicht umfaßt.

9. Behälter nach Anspruch 8, der die weitere äußere Schicht umfaßt, die ausgewählt ist aus den Polymeren von Propylen, das mit 1 bis 20 Gew.-% von zwei oder mehreren α-Olefinen mit 2 bis 8 Kohlenstoffatomen copolymerisiert worden ist, Polyethylenen mit sehr niedriger Dichte (VLDPE), Polyethylenen mit hoher Dichte (HDPE) und linearen Polyethylenen mit niedriger Dichte (LLDPE), Ethylen/Vinylacetat-Copolymeren (EVA) mit einem VA-Gehalt von 2 bis 30 %, Ethylen-Copolymeren mit Acryl- und Methacrylcomonomeren, Ionomeren, olefinischen Polymeren und Copolymeren, die mit funktionellen Gruppen modifiziert sind, Polyamiden, Polyestern, Copolyestern und ihren Gemischen.

10. Behälter nach Anspruch 9, bei dem die Acryl- und Methacrylcomonomere ausgewählt sind aus Acryl- und Methacrylsäuren und Alkylacrylaten und Methacrylaten mit C₁- bis C₄-Alkyleinheiten, mit funktionellen Gruppen modifiziert oder nicht modifiziert, wobei die modifizierten olefinischen Polymere und Copolymere ausgewählt sind aus modifiziertem EVA, Polyethylen und Polypropylen, und die Polyamide ausgewählt sind aus Nylon 6, Nylon 6-66 Nylon 6-12 und Nylon 6-69.

11. Behälter nach Anspruch 8, der ferner zwischen den äußeren Schichten und der Kernschicht angeordnete Klebstoffschichten umfaßt, die ausgewählt sind aus Ethylenpolymeren und Copolymeren, die mit funktionellen Gruppen modifiziert sind oder nicht modifiziert sind.

12. Behälter nach Anspruch 1 oder Anspruch 8, der aus der Mehrschichtfolie hergestellt worden ist, die in Schlauchform bereitgestellt worden ist, und der eine untere Siegelnaht aufweist, die quer zur axialen Erstreckung der Schlauchfolie verläuft.

13. Behälter nach Anspruch 1 oder Anspruch 8, der aus der Mehrschichtfolie hergestellt worden ist, die in Schlauchform bereitgestellt worden ist, und der zwei seitliche Siegelnähte aufweist, die parallel zu der axialen Erstreckung der Schlauchfolie verlaufen.

14. Behälter nach einem der vorhergehenden Ansprüche, der durch mindestens ein monoaxiales Recken der Mehrschichtfolie schrumpffähig gemacht worden ist.

15. Behälter nach einem der vorhergehenden Ansprüche, bei dem die Mehrschichtfolie mindestens eine Schicht aufweist, die vernetzt worden ist.

16. Behälter nach Anspruch 15, bei dem die Mehrschichtfolie durch Bestrahlen vollständig vernetzt ist.

17. Behälter nach einem der Ansprüche 12 bis 16, bei dem die Heißsiegelschicht mittels Corona-Entladung behandelt worden ist, um ihr Eiweißhaftungseigenschaften zu verleihen.

18. Behälter nach einem der vorhergehenden Ansprüche zur Verwendung in wärmeverarbeitbaren Verpackungen.

19. Wärmeverarbeitbare Verpackung, die einen Behälter gemäß einem der Ansprüche 1 bis 18 umfaßt.

## Revendications

1. Récipient pouvant être traité à la chaleur fait d'un film multicouches thermorétrécissable comprenant au moins une couche de thermosoudage externe et éventuellement une couche centrale faisant barrière aux gaz, ladite couche de thermosoudage comprenant des copolymères de propylène, copolymérisés avec 1 à 10% en poids de 2 α-oléfines ou plus, choisies dans l'ensemble consistant en éthylène et en α-oléfines ayant de 4 à 8 atomes de carbone, ledit récipient ayant au moins une zone soudée.

2. Récipient de la revendication 1, dans lequel la couche de thermosoudage comprend des polymères de propylène copolymérisés avec 3 à 10% en poids desdites deux alpha-oléfines ou plus.

3. Récipient de la revendication 1 ou 2, dans lequel ladite couche de thermosoudage comprend des terpolymères de propylène avec de l'éthylène et du butène.

4. Récipient de la revendication 1, dans lequel ladite couche de thermosoudage comprend un mélange de 99 à 50% en poids desdits polymères de propylène avec 1 à 50% en poids d'au moins un copolymère de propylène supplémentaire avec un comonomère choisi parmi des alpha-oléfines ayant 2 à 8 atomes de carbone.

5. Récipient de la revendication 4, dans lequel ledit copolymère de propylène supplémentaire comprend de 1 à 20% en poids desdits comonomères d'alpha-oléfine.

6. Récipient de la revendication 4 ou 5, dans lequel ledit copolymère de propylène supplémentaire comprend un comonomère choisi parmi l'éthylène et le butène.

7. Récipient de la revendication 1, dans lequel ladite couche faisant barrière aux gaz est choisie parmi des polymères de PVDC et d'EVOH, et leurs mélanges avec d'autres polymères.

8. Récipient de la revendication 1, fait d'un film multicouches comprenant une dite couche de thermosoudage, une dite couche centrale faisant barrière aux gaz, et une autre couche de structure externe.

9. Récipient de la revendication 8, contenant ladite autre couche externe choisie parmi lesdits polymères de propylène copolymérisés avec 1 à 20% en poids de deux alpha-oléfines ou plus ayant de 2 à 8 atomes de carbone, des polyéthylènes très basse densité (VLDPE), haute densité (HDPE) et basse densité linéaire (LLDPE), des copolymères d'éthylène-acétate de vinyle (EVA) avec une teneur en VA de 2 à 30%, des copolymères d'éthylène avec des comonomères acryliques et méthacryliques, des ionomères, des polymères et copolymères oléfiniques modifiés par des groupes fonctionnels, des polyamides, des polyesters, des copolyesters, et leurs mélanges.

10. Récipient de la revendication 9, dans lequel lesdits comonomères acryliques et méthacryliques sont choisis parmi des acides acryliques et méthacryliques, et des acrylates et méthacrylates d'alkyle, avec des parties alkyliques en C₁-C₄, modifiés ou non par des groupes fonctionnels ; lesdits polymères et copolymères oléfiniques modifiés sont choisis parmi l'EVA modifié, le polyéthylène et polypropylène modifiés ; et lesdits polyamides sont choisis parmi le Nylon 6, le Nylon 6-66, le Nylon 6-12 et le Nylon 6-69.

11. Récipient de la revendication 8, comprenant en outre des couches adhésives interposées entre lesdites couches externes et centrales qui sont choisies parmi des polymères et des copolymères d'éthylène, modifiés ou non par des groupes fonctionnels.

12. Récipient de la revendication 1 ou 8, fait dudit film multicouches préparé sous une forme tubulaire et ayant une soudure de fond transversale par rapport à la dimension axiale dudit film tubulaire.

13. Récipient de la revendication 1 ou 8, faite dudit film multicouches préparé sous une forme tubulaire et ayant deux soudures latérales parallèles à la dimension axiale dudit film tubulaire.

14. Récipient de l'une quelconque des revendications précédentes qui a été rendu thermorétrécissable par au moins un étirement monoaxial dudit film multicouches.

15. Récipient de l'une quelconque des revendications précédentes, dans lequel ledit film multicouches a au moins une couche qui a été réticulée.

16. Récipient de la revendication 15, dans lequel ledit film multicouches est entièrement réticulé par irradiation.

17. Récipient de l'une quelconque des revendications 12 à 16, dans lequel ladite couche thermosoudable a été traitée par un traitement par effet de couronne pour lui conférer des propriétés d'adhésion aux protéines.

18. Récipient selon l'une quelconque des revendications précédentes destiné à être utilisé dans un emballage pouvant être traité à la chaleur.

19. Emballage pouvant être traité à la chaleur comprenant un récipient selon l'une quelconque des revendications 1 à 18.
